# EUROPÄISCHE PATENTSCHRIFT

(11) **EP 3 804 048 B1**
(45) Veröffentlichungstag und Bekanntmachung des Hinweises auf die Patenterteilung: **10.08.2022**
(21) Anmeldenummer: 19716380.1
(22) Anmeldetag: 04.04.2019
(51) Int. Cl.: H01R 13/6592, H01R 43/28, H02G 1/12

(54) **VORRICHTUNG UND VERFAHREN ZUM BEARBEITEN EINES ENDES EINES ELEKTRISCHEN KABELS**
DEVICE AND METHOD FOR PROCESSING AN END OF AN ELECTRICAL CABLE
DISPOSITIF ET PROCÉDÉ SERVANT À USINER UNE EXTRÉMITÉ D'UN CÂBLE ÉLECTRIQUE

(30) Priorität: 24.05.2018 DE 102018112470
(43) Veröffentlichungstag der Anmeldung: 14.04.2021
(73) Patentinhaber: Metzner Maschinenbau GmbH, 89231 Neu-Ulm (DE)
(72) Erfinder: BAUMGAERTNER, Andreas, 89077 Ulm (DE)
(74) Vertreter: Lorenz, Markus
(86) Internationale Anmeldenummer: PCT/EP2019/058559
(87) Internationale Veröffentlichungsnummer: WO 2019/223923

(56) Entgegenhaltungen:
- EP-A1- 2 117 089
- JP-A- 2000 184 548
- JP-A- 2010 011 599
- US-A1- 2008 313 892
- US-A1- 2015 288 153

## Beschreibung

Die Erfindung betrifft eine Vorrichtung zum Bearbeiten eines Endes eines elektrischen Kabels nach dem Oberbegriff von Anspruch 1.

Die Erfindung betrifft auch ein Verfahren zum maschinellen Bearbeiten eines Endes eines elektrischen Kabels gemäß dem Oberbegriff von Anspruch 9.

Die Erfindung betrifft außerdem ein Kabelkonfektionierungssystem nach dem Oberbegriff von Anspruch 13.

Bei der Konfektionierung von elektrischen Kabeln werden deren Leiter typischerweise mit einem Steckverbinder verbunden. Im Rahmen der Kabelkonfektionierung wird somit zumindest ein Ende eines elektrischen Kabels bearbeitet, um dieses für die Verbindung mit dem Steckverbinder vorzubereiten.

Die Bearbeitung des oder der Enden des elektrischen Kabels kann dabei unter anderem das Freilegen bzw. Abisolieren von Außenleitern und Innenleitern, das bereichsweise Ablängen des Kabels, das Aufbringen einer Stützhülse für das Montieren des Steckverbinders, das Umstülpen eines Außenleiters auf die Stützhülse und/oder die Endmontage des Steckverbinders umfassen.

Besondere Schwierigkeiten bereitet hierbei in der Regel das Umbiegen bzw. Umstülpen des Außenleiters, insbesondere wenn der Außenleiter als Kabelschirmgeflecht ausgebildet ist. Obwohl dieser Bearbeitungsschritt manuell vergleichsweise einfach durchgeführt werden kann, ist es zur Kostensenkung dennoch vorteilhaft, eine möglichst vollautomatische Konfektionierung und somit eine vollständige maschinelle Bearbeitung für eine Massenproduktion anzustreben.

Ein entsprechend maschinell automatisierbares Verfahren ist beispielsweise aus der gattungsgemäßen EP 1 886 387 B1 bekannt. In der EP 1 886 387 B1 wird ein Verfahren beschrieben, bei ein Außenleiterschirmgeflecht über wenigstens einen Teil seines Umfangs mit einer radialen Kraft beaufschlagt wird, wofür ein zangenartiges Werkzeug verwendet wird. Hierdurch kann der Außenleiter radial aufgeweitet und schließlich umgebogen werden. Dieses Verfahren hat sich bewährt und erzielt insbesondere bei der Massenfertigung erhebliche Einsparungen bezüglich Kosten und Zeit. Ein weiteres Verfahren zum Umlegen eines Außenleiterschirmgeflechts ist in der EP 2 117 089 A1 offenbart. In der EP 2 117 089 A1 wird hierzu vorgeschlagen, den Außenleiter mittels einer rotierenden Bürste umzulegen.

Das bekannte Verfahren vermag einen als Kabelschirmgeflecht ausgebildeten Außenleiter während der Bearbeitung allerdings nicht zu entflechten, weshalb das Kabelschirmgeflecht anschließend ungleichmäßig auf der Stützhülse aufliegt. Es hat sich gezeigt, dass sich nicht alle Steckverbindertypen gleichermaßen eignen, um mit einem geflochten auf der Stützhülse liegenden Schirmgeflecht elektrisch zufriedenstellend und/oder mechanisch ausreichend stabil verbunden zu werden. Anwendungsbedingt kann es demnach erforderlich sein, dass die Litzen des Außenleiters gleichmäßig und insbesondere entflochten auf der Stützhülse aufliegen. In der JP 2010 011599 A wird ein manuelles Verfahren zum Ausbürsten eines Schirmgeflechts mittels rotierenden Bürsten beschrieben; für eine maschinelle Bearbeitung eignet sich das Verfahren jedoch nicht.

Zum allgemeinen Hintergrund wird außerdem noch auf die JP 2000 184548 A verwiesen, die ein Verfahren und eine Vorrichtung zum Umlegen eines freigelegten Außenleiters eines Koaxialkabels betrifft.

Der vorliegenden Erfindung liegt die Aufgabe zugrunde, eine Vorrichtung zum Bearbeiten eines Endes eines elektrischen Kabels bereitzustellen, das insbesondere geeignet ist, ein Kabelschirmgeflecht des Kabels gerade auszurichten bzw. zu entflechten und somit für eine anschließende Konfektionierung vorzubereiten.

Der vorliegenden Erfindung liegt auch die Aufgabe zugrunde, ein Verfahren zum Bearbeiten eines Endes eines elektrischen Kabels bereitzustellen, bei dem ein Kabelschirmgeflecht des Kabels insbesondere für eine nachfolgende Konfektionierung gerade ausgerichtet bzw. entflechtet werden kann.

Schließlich liegt der Erfindung auch die Aufgabe zugrunde, ein Kabelkonfektionierungssystem bereitzustellen.

Die Aufgabe wird für die Vorrichtung durch Anspruch 1 und für das Verfahren durch Anspruch 9 gelöst.

Die Aufgabe wird hinsichtlich des Kabelkonfektionierungssystems durch die Merkmale des Anspruchs 13 gelöst. Die abhängigen Ansprüche betreffen vorteilhafte Ausführungsformen und Varianten der Erfindung.

Die erfindungsgemäße Vorrichtung zum Bearbeiten eines Endes eines elektrischen Kabels umfasst eine Klemmvorrichtung zum Fixieren des Kabels.

In einer bevorzugten Variante ist eine Vorrichtung zum maschinellen Bearbeiten des Endes des elektrischen Kabels vorgesehen, insbesondere zum automatisierten oder vollautomatisierten Konfektionieren des Kabelendes.

Erfindungsgemäß sind mehrere antreibbare Bürsten vorgesehen, die entlang des Umfangs des durch die Klemmvorrichtung fixierten Kabels verteilt angeordnet und ausgebildet sind, um ein zumindest im Bereich des zu bearbeitenden Endes des Kabels freigelegtes Kabelschirmgeflecht in Richtung auf das zu bearbeitende Ende des Kabels geradezubürsten, wobei die Klemmvorrichtung ausgebildet ist, um das Kabel während des Bürstens verdrehsicher zu fixieren.

Grundsätzlich eignet sich die Erfindung zur Verwendung mit einem beliebigen elektrischen Kabel, das wenigstens einen elektrischen Leiter umfasst. Ganz besonders eignet sich die Erfindung zur Verwendung mit elektrischen Kabeln, deren Außenleiter als Kabelschirmgeflecht ausgebildet ist, d. h. als miteinander verflochtene Einzellitzen bzw. Einzeldrähte vorliegt. Aus diesem Grund wird das Kabelschirmgeflecht nachfolgend auch als "Außenleiter" bezeichnet. Dies ist allerdings nicht einschränkend zu verstehen.

Die Erfindung kann sich beispielsweise gut für die Bearbeitung eines Endes eines Koaxialkabels eignen.

In eingelegtem Zustand kann das elektrische Kabel im Rahmen der Erfindung auch als Teil der Vorrichtung angesehen werden.

Durch die Verwendung der Bürsten, die in Richtung des zu bearbeitenden Endes des elektrischen Kabels angetrieben und mit dem Außenleiter bzw. mit dem Kabelschirmgeflecht in mechanischen Kontakt gebracht werden, kann der Außenleiter durch die Borsten bzw. den Besatz der Bürsten entlang der Längsachse/Axialrichtung des Kabels bzw. entlang der Drehrichtung der Bürsten ausgerichtet werden. Insbesondere im Falle eines aus Einzellitzen bzw. einzelnen Drähten gebildeten Außenleiters werden die einzelnen Drähte bzw. Litzen durch das Bürsten linear entlang der Längsachse des Kabels ausgerichtet. Der Erfinder hat erkannt, dass ein Kabelschirmgeflecht durch die bürstende Bewegung der Bürsten verlässlich entflochten werden kann.

Mittels der Klemmvorrichtung kann das elektrische Kabel vorteilhaft gegen ein Verdrehen gesichert werden. Auch eine axiale Sicherung des elektrischen Kabels mittels der Klemmvorrichtung, dauerhaft oder nur während bestimmter Bearbeitungsschritte, ist möglich.

Aufgrund der Klemmvorrichtung kann sich die Erfindung insbesondere auch zur Bearbeitung eines Endes eines elektrischen Kabels eignen, das auf einer Kabeltrommel angeordnet ist.

Eine verdrehsichere Fixierung des Kabels ist für eine automatisierte Bearbeitung des Kabels in der Regel erforderlich oder zumindest vorteilhaft. Durch die Verteilung der Bürsten entlang des Umfangs des Kabels kann erfindungsgemäß dennoch eine vollumfassende Bearbeitung des Kabelschirmgeflechts stattfinden. Das heißt, erfindungsgemäß ist es nicht erforderlich, das Kabel maschinell aufwändig oder sogar manuell während der Bearbeitung zu drehen.

Der Erfinder hat erkannt, dass insbesondere die Verwendung von mehr als zwei Bürsten zum Geradebürsten des Kabelschirmgeflechts überraschend von Vorteil ist. Durch die Verwendung von zumindest drei Bürsten kann das Bürstergebnis deutlich verbessert werden. Durch ein entsprechend bearbeitetes Kabelschirmgeflecht können anschließend die mechanischen Eigenschaften des auf dem Kabelende konfektionierten Steckverbinders (Haltekraft, Vibrationsbeständigkeit etc.) als auch die elektrischen Eigenschaften (Leitfähigkeit, Impedanzeigenschaften etc.) verbessert sein.

In einer Weiterbildung der Erfindung kann vorgesehen sein, dass die Klemmvorrichtung wenigstens zwei an das Kabel zustellbare Klemmbacken umfasst.

Grundsätzlich kann allerdings eine beliebige Klemmvorrichtung vorgesehen sein, insbesondere aber eine elektrisch, pneumatisch und/oder hydraulisch ansteuerbare Klemmvorrichtung, die das elektrische Kabel kraftschlüssig zu fixieren vermag.

In einer Weiterbildung kann vorgesehen sein, dass die Klemmvorrichtung ausgebildet und eingerichtet ist, um das zu bearbeitende Ende des fixierten Kabels zwischen einer Grundposition und wenigstens einer ersten Bearbeitungsposition entlang einer Vorschubrichtung axial zu bewegen.

Die Vorschubrichtung kann insbesondere in Richtung der Längsachse des elektrischen Kabels ausgerichtet sein.

Es kann somit vorgesehen sein, dass die Klemmvorrichtung das Kabel sowohl verdrehsicher als auch axial fixiert, vorzugsweise kraftschlüssig. Dabei kann die Klemmvorrichtung allerdings in Axialrichtung (linear) beweglich ausgebildet, und insbesondere unter Verwendung eines Aktuators entlang der Vorschubrichtung frei positionierbar sein. Die Klemmvorrichtung kann beispielsweise mittels eines Schienensystems, ggf. unter Verwendung eines Seilzugs und/oder pneumatischer und/oder hydraulischer Komponenten, linear beweglich ausgebildet sein. Die Klemmvorrichtung kann für die Positionierung des Kabels auch eine Kulissenführung aufweisen.

Die Grundposition kann dabei beispielsweise einer Position entsprechen, in der das zu bearbeitende Ende des elektrischen Kabels in die Vorrichtung eingebracht wird. Beispielsweise können ein Benutzer der Vorrichtung und/oder eine weitere Einrichtung das zu bearbeitende Ende des elektrischen Kabels bis in die Grundposition in die Klemmvorrichtung einlegen oder einschieben.

Die Klemmvorrichtung kann vorteilhaft verwendet werden, um das zu bearbeitende Ende des elektrischen Kabels zwischen verschiedenen Bearbeitungspositionen bzw. Bearbeitungsstationen innerhalb der erfindungsgemäßen Vorrichtung zu transportieren.

In einer Weiterbildung der Erfindung kann außerdem vorgesehen sein, dass die Klemmvorrichtung und/oder die Bürsten ausgebildet und eingerichtet sind, um das freigelegte Kabelschirmgeflecht des Kabels während des Bürstens in Bürstrichtung axial zwischen den Bürsten hindurch zu bewegen.

In einer Variante der Erfindung kann eine axiale Relativbewegung zwischen dem Kabel (bzw. dem zu bearbeitenden Ende des Kabels) und den Bürsten während des Bürstens vorgesehen sein. Die Klemmvorrichtung und/oder die Bürsten können mittels einer oder mehrerer Aktuatoreinheiten, beispielsweise in der Art von Linearantrieben, axial bewegbar sein. Eine manuelle axiale Bewegung des Kabels bzw. dessen Endes durch die Bürsten, beispielsweise durch einen Mitarbeiter der Produktion, ist in der Regel nicht vorgesehen. Vorzugsweise ist eine vollautomatisierte Kabelbearbeitung vorgesehen.

Eine kontinuierliche Zuführung des zu bearbeitenden Endes des elektrischen Kabels durch die Bürsten kann insbesondere von Vorteil sein, wenn das zu bearbeitende Ende des Kabels bzw. wenn das zu bürstende Kabelschirmgeflecht vergleichsweise lang ist und die Berührfläche zwischen den Bürsten und dem Kabelschirmgeflecht das Kabelschirmgeflecht nicht vollständig in dem zu bearbeitenden Bereich umfasst. Die gleichzeitige Zustellung des Kabelschirmgeflechts während des Bürstens kann das Bürstergebnis aber auch grundsätzlich verbessern.

Mit einer Zuführung des zu bearbeitenden Endes des elektrischen Kabels bzw. einer Bewegung des zu bearbeitenden Endes des elektrischen Kabels zwischen den Bürsten hindurch ist eine Relativbewegung des zu bearbeitenden Endes des elektrischen Kabels und den Bürsten zu verstehen. Es ist im Rahmen der Erfindung möglich, die Klemmvorrichtung und/oder die Bürsten entsprechend zuzuführen.

In einer Weiterbildung der Erfindung können vorzugsweise vier Bürsten, beispielsweise auch fünf, sechs, sieben, acht oder mehr Bürsten vorgesehen sein.

Grundsätzlich kann die Verwendung einer großen Zahl von Bürsten für eine gleichmäßige Bearbeitung des Kabelschirmgeflechts entlang des Umfangs des Kabels vorteilhaft sein. Gegebenenfalls kann allerdings der zur Verfügung stehende Platz innerhalb der Vorrichtung begrenzt sein. Für viele Anwendungen können sich demnach vier Bürsten, die gleichmäßig entlang des Umfangs des Kabels verteilt angeordnet sind, als Optimallösung besonders gut eignen.

In einer Weiterbildung kann vorgesehen sein, dass die Bürsten als Rundbürsten ausgebildet sind.

Unter einer Rundbürste können beliebige Bürsten verstanden werden, die sich um eine Mittelachse antreiben lassen, beispielsweise auch sogenannte Topfbürsten und Kegelbürsten. Die Rundbürsten müssen nicht vollständig rund sondern können z. B. auch oval ausgebildet sein.

Grundsätzlich können beliebige Bürsten vorgesehen sein, beispielsweise auch Bürsten, die eine Linearbewegung durchzuführen, oder umlaufende Bürsten.

Es kann vorgesehen sein, dass die Bürsten einen Nylonbesatz aufweisen.

Grundsätzlich kann sich allerdings ein beliebiger Bürstenbesatz eignen, beispielsweise auch ein Bürstenbesatz aus Naturfasern, aus Kunstfasern oder aus Draht. Der Fachmann kann einen zum Bürsten des Kabelschirmgeflechts geeigneten Besatz anwendungsbedingt und in Abhängigkeit des Materials des Kabelschirmgeflechts auswählen.

Die Bürsten können radial an das zu bearbeitende Ende des elektrischen Kabels zustellbar ausgebildet sein. Die radiale Zustellung kann beispielsweise mittels eines linearen Schrittmotors erfolgen.

In einer Weiterbildung der Erfindung kann eine axial an das zu bearbeitende Ende des Kabels zustellbare Hülse vorgesehen sein, und/oder vorgesehen sein, dass die Klemmvorrichtung ausgebildet und eingerichtet ist, um das zu bearbeitende Ende des Kabels an die Hülse zuzustellen, um die Hülse vor oder während des Bürstens zwischen das freigelegte Kabelschirmgeflecht und einen darunterliegenden Mantel des Kabels einzuschieben.

Eine Hülse mit nur geringer Wandstärke kann sich hierzu besonders gut eignen.

Es kann insbesondere von Vorteil sein, wenn das zu bearbeitende Ende des Kabels vor oder während des Bürstens an die Hülse zugestellt wird. Die Hülse kann hierzu in der Vorrichtung unbeweglich festgelegt sein. Auch Mischformen, bei denen die Hülse und das Kabelschirmgeflecht jeweils aufeinander zubewegt werden, sind möglich.

Beispielsweise kann die Hülse im Bereich der Bürsten bzw. zwischen den Bürsten angeordnet sein.

Das Einschieben einer Hülse unter den zu bürstenden Abschnitt des Kabelschirmgeflechts kann von Vorteil sein, um unter dem Kabelschirmgeflecht befindliche Bereiche des Kabels, insbesondere darunter liegende Schutzmäntel, Dielektrika und/oder Innenleiter vor dem Bürsten mechanisch, thermisch und/oder vor elektrostatischer Aufladung zu schützen.

In einer Weiterbildung der Erfindung kann ferner ein radial an das freigelegte Kabelschirmgeflecht zustellbares zangenartiges Werkzeug vorgesehen sein, das ausgebildet und eingerichtet ist, radial umlaufende Eindrückungen in dem Kabelschirmgeflecht zu erzeugen, so dass sich das freigelegte Ende des Kabelschirmgeflechts radial aufweitet.

Unter einem radialen Aufweiten kann insbesondere ein elastisches oder plastisches Umbiegen des Abschnitts des Kabelschirmgeflechts verstanden werden derart, dass sich dieser Abschnitt zumindest teilweise in radialer Richtung, aber nicht zwingend senkrecht, zu der Längsachse des elektrischen Kabels erstreckt.

In vorteilhafter Weise ist die radiale Kraft zur Erzeugung der Eindrückungen kleiner als eine Kraft, die zum wenigstens teilweisen Durchtrennen des Kabelschirmgeflechts erforderlich wäre.

Bei dem zangenartigen Werkzeug kann es sich vorzugsweise um ein Formmesser handeln, welches an den Außenumfang des elektrischen Kabels angepasst ist. Vorzugsweise wird ein stumpfes Formmesser verwendet.

Das zangenartige Werkzeug zum Aufweiten des Kabelschirmgeflechts kann beispielsweise an einer ersten Bearbeitungsposition innerhalb der erfindungsgemäßen Vorrichtung angeordnet sein, an die das zu bearbeitende Ende des elektrischen Kabels mittels der Klemmvorrichtung, ausgehend von der Grundposition in einem ersten Bearbeitungsschritt angefahren wird. Anschließend kann die Klemmvorrichtung das zu bearbeitende Ende des elektrischen Kabels mit dem radial aufgeweiteten Kabelschirmgeflecht zu einer nachfolgenden Bearbeitungsposition oder Bearbeitungsstation bewegen, die beispielsweise im Bereich der Bürsten angeordnet ist.

Ein radiales Aufweiten des Kabelschirmgeflechts kann beispielsweise von Vorteil sein, um in einem nachfolgenden Bearbeitungsschritt die Hülse einfacher unter das Kabelschirmgeflecht einzuschieben. Dabei kann es besonders von Vorteil sein, das Kabelschirmgeflecht nur geringfügig radial aufzuweiten, um keine definierte Stoßkante für die Hülse einzubringen, da die Hülse das Kabelschirmgeflecht sonst ggf. noch weiter aufweitet, anstatt unter das Kabelschirmgeflecht einzudringen. Grundsätzlich ist es aber auch möglich, die Hülse unter das Kabelschirmgeflecht zu schieben, ohne das Kabelschirmgeflecht zuvor aufzuweiten. Ferner sind auch andere Lösungen möglich, um das Kabelschirmgeflecht aufzuweiten; es muss hierfür nicht unbedingt das zangenartige Werkzeug verwendet werden.

Das zangenartige Werkzeug kann die radial umlaufenden Eindrückungen an einer, zwei, drei, vier, fünf oder noch mehr axial zueinander versetzten Positionen entlang des Kabelschirmgeflechts vornehmen. Beispielsweise kann die Klemmvorrichtung verwendet werden, um das zu bearbeitende Ende des Kabels hierzu axial zwischen dem zangenartigen Werkzeug schrittweise weiterzubewegen. Durch das Erzeugen mehrerer Eindrückungen, die entlang des Kabelschirmgeflechts axial versetzt voneinander angeordnet sind, kann insbesondere ein gleichmäßiges Aufweiten und gegebenenfalls auch eine größere Aufweitung erzeugt werden.

In einer Weiterbildung kann vorgesehen sein, dass die antreibbaren Bürsten eingerichtet sind, um nach dem Geradebürsten des Kabelschirmgeflechts ihre Drehrichtung umzukehren und/oder dass die Hülse und/oder die Klemmvorrichtung eingerichtet ist, einen Stoßimpuls gegen die Bürstrichtung zwischen das Kabelschirmgeflecht und den darunter liegenden Mantel des Kabels einzuleiten, um das freigelegte Ende des Kabelschirmgeflechts radial aufzuweiten.

Eine weitere radiale Aufweitung des Kabelschirmgeflechts nach dem Bürsten des Kabelschirmgeflechts kann für viele Anwendungen von Vorteil sein, die ein anschließendes Umstülpen des Kabelschirmgeflechts bzw. der Einzellitzen/Einzeldrähte des Außenleiters erfordern.

Eine Drehrichtungsänderung der Bürsten nach dem Geradebürsten kann dazu beitragen, die ausgerichteten Einzellitzen/Einzeldrähte des Kabelschirmgeflechts aufzustellen.

Auch ein axialer Stoßimpuls kann ein Aufstellen der Einzellitzen/Einzeldrähte des Außenleiters zur Folge haben. Dabei kann zusätzlich oder alternativ zu einer stoßartigen Bewegung der Hülse auch vorgesehen sein, das zu bearbeitende Ende des elektrischen Kabels mittels der Klemmvorrichtung stoßartig gegen die Hülse zu bewegen.

In einer Variante der Erfindung können außerdem ein entgegen die Bürstrichtung axial bis über das zu bearbeitende Ende des Kabels zustellbarer Stempel und eine das zu bearbeitende Ende des Kabels zumindest teilweise umfassende Matrize vorgesehen sein, die angeordnet und eingerichtet sind, um während der Zustellung des Stempels
- zunächst das Kabelschirmgeflecht zwischen Stempel und Matrize radial aufzustellen, bis der Stempel im Wesentlichen axial an der Matrize anliegt,
- anschließend überschüssiges Material des Kabelschirmgeflechts mittels Scherkräften zwischen Stempel und Matrize abzutrennen, während der Stempel in die Matrize eindringt, und
- schließlich das Kabelschirmgeflecht durch Überfahren eines sich in das zu bearbeitende Ende des Kabels anschließenden Abschnitts des Kabels umzustülpen.

Zum weiteren Hintergrund zu dieser Variante wird auf die EP 2 912 736 B1 verwiesen. Mittels Kombination aus Stempel und Matrize können die Einzellitzen/Einzeldrähte des Kabelschirmgeflechts in entflochtener Form im Wesentlichen gerade nach hinten umgeklappt bzw. umgestülpt werden, beispielsweise auf eine Stützhülse zum Vercrimpen mit einem anschließend montierten Steckverbinder.

Für eine entsprechende Ablängung eines entflochtenen Kabelschirmgeflechts kann vorteilhaft berücksichtigt werden, dass der entflochtene Kabelschirm in der Regel länger ist, als der verflochtene Kabelschirm. Der Stempel und/oder die Matrize können entsprechend dimensioniert sein.

Nach der Bearbeitung eines ersten Endes des elektrischen Kabels mittels der erfindungsgemäßen Vorrichtung kann gegebenenfalls auch ein zweites Ende des elektrischen Kabels mittels der erfindungsgemäßen Vorrichtung bearbeitet werden.

Die Erfindung betrifft auch ein Verfahren zum maschinellen Bearbeiten eines Endes eines elektrischen Kabels nach dem Oberbegriff von Anspruch 9.

Das erfindungsgemäße Verfahren bzw. die erfindungsgemäße Vorrichtung können sich besonders zur Bearbeitung von Kabeln zur Verwendung innerhalb von Fahrzeugen, insbesondere Kraftfahrzeugen, eignen. Mögliche Einsatzgebiete sind beispielsweise Elektrofahrzeuge, bei denen elektrische Kabel mit großem Querschnitt und guter Abschirmung erforderlich sind. Die erfindungsgemäße Vorrichtung bzw. das erfindungsgemäße Verfahren können sich allerdings auch besonders gut für die Bearbeitung von elektrischen Kabeln für die Hochfrequenztechnik eignen. Grundsätzlich eignet sich die Erfindung zur Bearbeitung beliebiger Kabel für beliebige Einsatzgebiete innerhalb der gesamten Elektrotechnik.

In einer Weiterbildung kann vorgesehen sein, dass das Kabelschirmgeflecht während dem Bürsten in Bürstrichtung zwischen den Bürsten hindurch bewegt wird und/oder dass die Bürsten ausgehend von einem vorderen Ende des Kabelschirmgeflechts entgegen einer Vorschubrichtung des Kabels über das Kabelschirmgeflecht geführt werden.

Die Geschwindigkeit der angetriebenen Bürsten sowie der Zustellung des Kabelschirmgeflechts während des Bürstens kann anhand von Simulationen, Berechnungen und/oder Messreihen anwendungsspezifisch bestimmt werden.

In einer Weiterbildung kann außerdem vorgesehen sein, dass vor oder während dem Bürsten eine Hülse zwischen das Kabelschirmgeflecht und einen darunterliegenden Mantel des Kabels eingeschoben wird, um unter dem Kabelschirmgeflecht befindliche Bereiche des Kabels zu schützen.

Hierzu kann die Hülse an das Kabelschirmgeflecht und/oder das Kabelschirmgeflecht an die Hülse zugestellt werden.

Die Verwendung einer Hülse zwischen Kabelschirmgeflecht und darunter befindlichen Bereichen des Kabels kann gegebenenfalls entfallen, wenn der Bereich des Kabels unterhalb des Kabelschirmgeflechts vergleichsweise unempfindlich gegen mechanische und thermische Belastungen des Bürstens ausgebildet ist. Bei Verwendung beispielsweise eines Mantels aus Polytetrafluorethylen (z. B. Teflon) oder PVC unterhalb des Kabelschirmgeflechts kann die Verwendung einer Hülse beispielsweise entfallen.

Die Verwendung einer Hülse kann in vorteilhafter Weise auch zur Zentrierung des zu bearbeitenden Endes des elektrischen Kabels und zur verbesserten Führung dienen.

In einer Weiterbildung kann schließlich auch vorgesehen sein, dass das freigelegte Ende des Kabelschirmgeflechts nach dem Bürsten radial aufgeweitet wird, indem die Drehrichtung der Bürsten umgekehrt wird und/oder indem ein Stoßimpuls zwischen das Kabelschirmgeflecht und den darunter liegenden Mantel des Kabels mittels der Hülse eingeleitet wird.

Der Stoßimpuls kann durch eine entsprechend stoßartige Bewegung der Hülse und/oder des Kabels bzw. der Klemmvorrichtung eingeleitet werden. Die Hülse stößt dadurch an den Übergang zwischen Kabelschirmgeflecht und den darunter liegenden Mantel des Kabels ruckartig an und kann zu einem Aufspreizen des Kabelschirmgeflechts an dieser Stelle führen.

Es kann vorgesehen sein, nach dem Bürsten des Kabelschirmgeflechts die Bürsten zunächst radial von dem zu bearbeitenden Ende des Kabels weg zu führen, anschließend die Drehrichtung zu ändern und radial wieder an das Kabelschirmgeflecht zuzustellen. Hierdurch kann zunächst sichergestellt werden, dass die Einzeldrähte/Einzellitzen sich von selbst in geringem Umfang radial aufspreizen, was durch nachfolgendes Zustellen der Bürsten, die sich nunmehr entgegen der ursprünglichen Bürstrichtung drehen, weiter unterstützt wird.

Nach dem erfindungsgemäßen Bürsten des Kabelschirmgeflechts und gegebenenfalls auch nach dem optionalen Umstülpen des Kabelschirmgeflechts kann im Rahmen des erfindungsgemäßen Verfahrens auch vorgesehen sein, dass mittels einer Trennvorrichtung ein Abschnitt eines Innenleiters freigelegt wird, indem mittels Schneidelementen der Trennvorrichtung ein umlaufender Schnitt in die Isolierschicht des wenigstens einen Innenleiters eingebracht und die so entstehende Isolationsschichthülse von dem wenigstens einen Innenleiter in Richtung des zu bearbeitenden Endes des elektrischen Kabels abgezogen wird.

Die Erfindung betrifft schließlich auch ein Kabelkonfektionierungssystem, nach dem Oberbegriff von Anspruch 13.

Merkmale, die bereits im Zusammenhang mit der erfindungsgemäßen Vorrichtung beschrieben wurden, sind selbstverständlich auch für das erfindungsgemäße Verfahren bzw. das Kabelkonfektionierungssystem vorteilhaft umsetzbar - und umgekehrt. Ferner können Vorteile, die bereits im Zusammenhang mit der erfindungsgemäßen Vorrichtung genannt wurden, auch auf das erfindungsgemäße Verfahren bzw. auf das Kabelkonfektionierungssystem bezogen verstanden werden - und umgekehrt.

Ergänzend sei darauf hingewiesen, dass Begriffe wie "umfassen", "aufweisen" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Fig. 1: die erfindungsgemäße Vorrichtung vor dem Einlegen des zu bearbeitenden Endes des elektrischen Kabels;
- Fig. 2: die erfindungsgemäße Vorrichtung mit einem in eine Grundposition eingelegten elektrischen Kabel;
- Fig. 3: die erfindungsgemäße Vorrichtung mit dem in der Grundposition mittels Klemmvorrichtung fixierten zu bearbeitenden Ende des elektrischen Kabels;
- Fig. 4: die erfindungsgemäße Vorrichtung mit dem in eine erste Bearbeitungsposition verbrachten zu bearbeitenden Ende des elektrischen Kabels;
- Fig. 5: die erfindungsgemäße Vorrichtung während eines Bearbeitungsschritts zum radialen Aufweiten des Kabelschirmgeflechts;
- Fig. 6: die erfindungsgemäße Vorrichtung während eines Bearbeitungszustands kurz vor Beginn des Bürstens und vor Zustellung des zu bearbeitenden Endes des Kabels an die Bürsten;
- Fig. 7: die erfindungsgemäße Vorrichtung während des Bürstens des Kabelschirmgeflechts;
- Fig. 8: die erfindungsgemäße Vorrichtung in einem Bearbeitungsschritt kurz vor dem Beenden des Bürstens des Kabelschirmgeflechts;
- Fig. 9: die erfindungsgemäße Vorrichtung während der Positionierung des zu bearbeitenden Endes des elektrischen Kabels für die Bearbeitung des Kabelschirmgeflechts mittels einem Stempel und einer Matrize;
- Fig. 10: die erfindungsgemäße Vorrichtung während dem radialen Aufstellen des Kabelschirmgeflechts zwischen Stempel und Matrize;
- Fig. 11: die erfindungsgemäße Vorrichtung während dem Abtrennen überschüssigen Materials des Kabelschirmgeflechts und dem Umstülpen des Kabelschirmgeflechts mittels des Stempels und der Matrize;
- Fig. 12: die erfindungsgemäße Vorrichtung nach der Bearbeitung des elektrischen Kabels;
- Fig. 13: das zu bearbeitende Ende des elektrischen Kabels während dem Bürstens mit vier Rundbürsten;
- Fig. 14: ein beispielhaftes Ende eines elektrischen Kabels nach der Bearbeitung durch die Vorrichtung und vor der Montage eines Steckverbinders; und
- Fig. 15: ein erfindungsgemäßes Kabelkonfektionierungssystem.

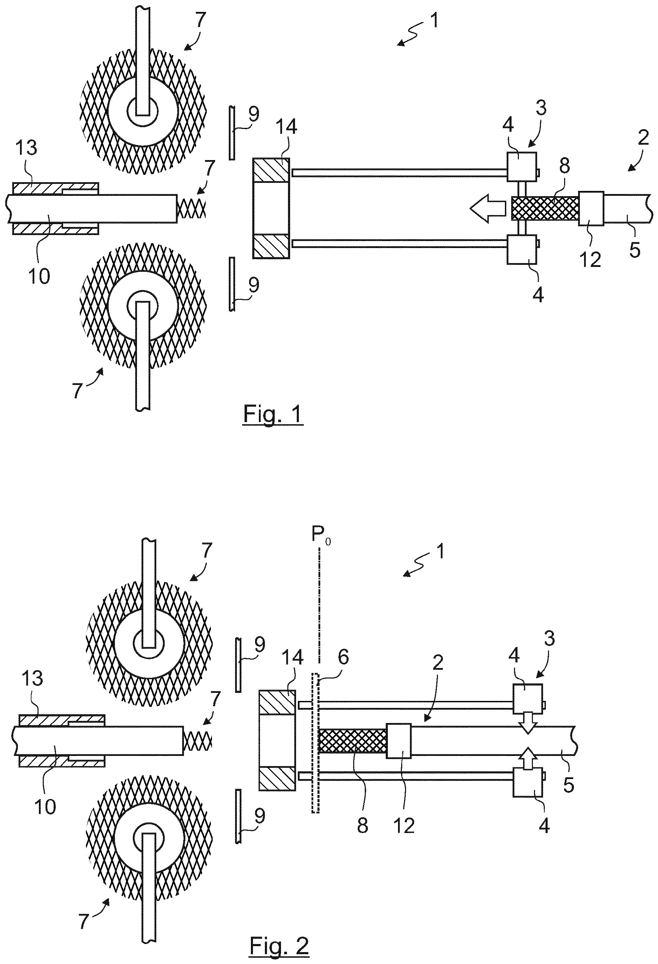

Die Figuren 1 bis 12 zeigen die erfindungsgemäße Vorrichtung 1 zum Bearbeiten eines Endes 2 eines elektrischen Kabels während der Durchführung eines maschinellen Bearbeitungsverfahrens zu verschiedenen Zeitpunkten. In Figur 1 ist ein Zustand der Vorrichtung 1 gezeigt, zu dem das zu bearbeitende Ende 2 des elektrischen Kabels noch nicht in die Vorrichtung 1 eingelegt ist. Grundsätzlich kann das zu bearbeitende Ende 2 des elektrischen Kabels manuell von einem Benutzer (nicht dargestellt) oder maschinell von einer weiteren Einrichtung (nicht dargestellt) der Vorrichtung 1 zugeführt werden.

Die Vorrichtung 1 ist lediglich schematisch hinsichtlich deren funktioneller Komponenten dargestellt und nur beispielhaft zu verstehen.

Die erfindungsgemäße Vorrichtung 1 umfasst eine Klemmvorrichtung 3 zum Fixieren des Endes 2 des Kabels. Die Klemmvorrichtung 3 ist ausgebildet, um das Ende 2 des elektrischen Kabels während des nachfolgend noch beschriebenen Bürstens verdrehsicher zu fixieren. Die Klemmvorrichtung 3 weist hierfür beispielsweise, wie im Ausführungsbeispiel gezeigt, wenigstens zwei an das Ende 2 des Kabels zustellbare Klemmbacken 4 auf. Die Klemmbacken 4 können an den Außenmantel 5 des elektrischen Kabels zustellbar sein und das Ende 2 des Kabels kraftschlüssig fixieren, wie in Figur 2 durch die Pfeile angedeutet. In Figur 2 befindet sich das zu bearbeitende Ende 2 des elektrischen Kabels in einer Grundposition P₀, ausgehend von der die Bearbeitung des Endes 2 des elektrischen Kabels initiiert werden kann. Zur Unterstützung eines Benutzers beim Einlegen des Endes 2 des elektrischen Kabels in die Vorrichtung 1 kann beispielweise ein verstellbarer Endanschlag 6 vorgesehen sein, der in Figur 2 gestrichelt angedeutet ist. Der Endanschlag 6 kann vor der Bearbeitung des Endes 2 des elektrischen Kabels manuell oder automatisch wieder entfernt werden, um den Verschiebeweg für das Ende 2 des elektrischen Kabels weiter in die Vorrichtung 1 freizugeben.

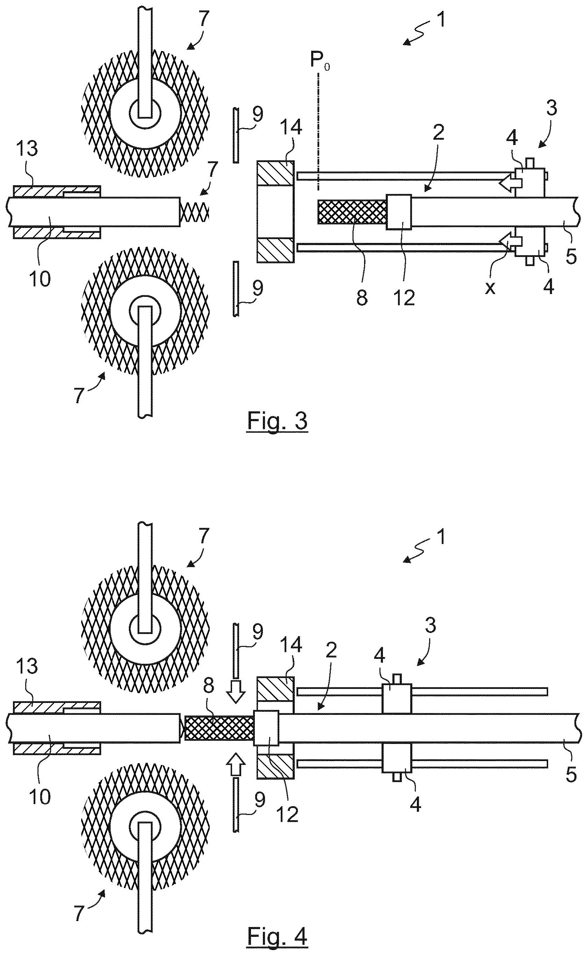

In vorteilhafter Weise kann vorgesehen sein, dass die Klemmvorrichtung 3 ausgebildet und eingerichtet ist, um das zu bearbeitenden Ende 2 des fixierten Kabels zwischen der Grundposition P₀ und wenigstens einer ersten Bearbeitungsposition P₁ (vgl. z. B. Figur 4) entlang einer Vorschubrichtung x (vgl. z. B. Figur 3) axial zu bewegen. Die Klemmvorrichtung 3 vermag somit das zu bearbeitende Ende 2 des Kabels im Verlauf des mittels der Vorrichtung 1 ausgeführten maschinellen Bearbeitungsverfahrens zwischen verschiedenen Bearbeitungsstationen bzw. Bearbeitungspositionen P₀, P₁, P₂ zu bewegen, wie dies in den Figuren 1 bis 12 dargestellt ist.

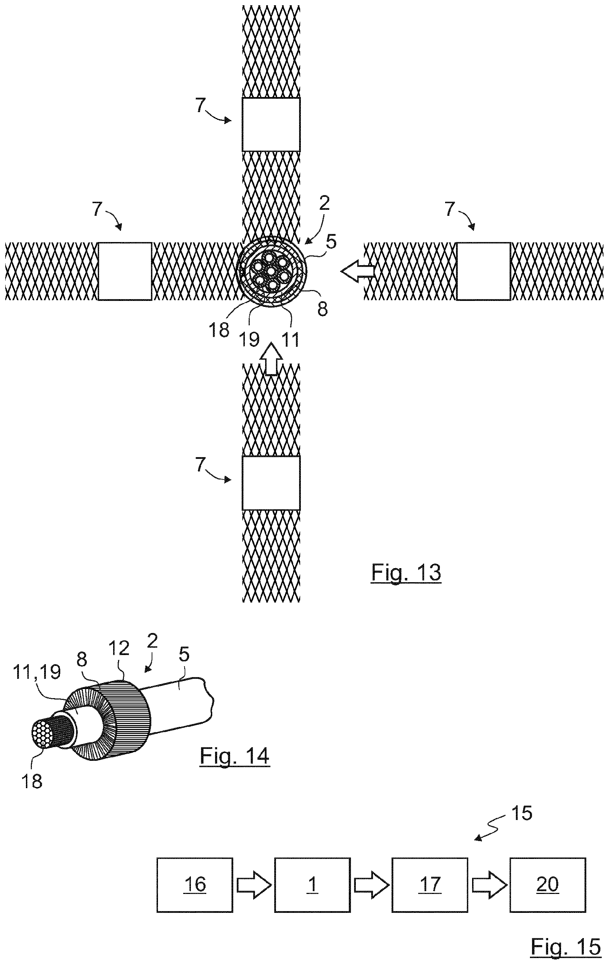

Die Vorrichtung 1 umfasst außerdem mehrere antreibbare Bürsten 7, die entlang des Umfangs des durch die Klemmvorrichtung 3 fixierten Endes 2 des elektrischen Kabels verteilt angeordnet sind. Im Ausführungsbeispiel sind vier antreibbare Bürsten 7 vorgesehen, die gleichmäßig um das zu bearbeitende Ende 2 des elektrischen Kabels verteilt angeordnet sind, wie u. a. in Figur 13 dargestellt. Grundsätzlich können aber auch nur drei Bürsten 7 oder auch mehr als vier Bürsten 7, fünf, sechs, sieben oder acht Bürsten 7 vorgesehen sein. Eine große Anzahl Bürsten 7 kann vorteilhaft sein, um das zu bearbeitende Ende 2 des elektrischen Kabels gleichmäßig entlang seines Umfangs zu bearbeiten. Eine große Anzahl Bürsten 7 beansprucht allerdings vergleichsweise viel Bauraum innerhalb der Vorrichtung 1, weshalb der Fachmann in der Regel anwendungsspezifisch die optimale Anzahl an Bürsten 7 bestimmen kann. Im Ausführungsbeispiel sind die Bürsten als Rundbürsten 7 ausgebildet. Es ist aber auch möglich, andere Arten von Bürsten vorzusehen.

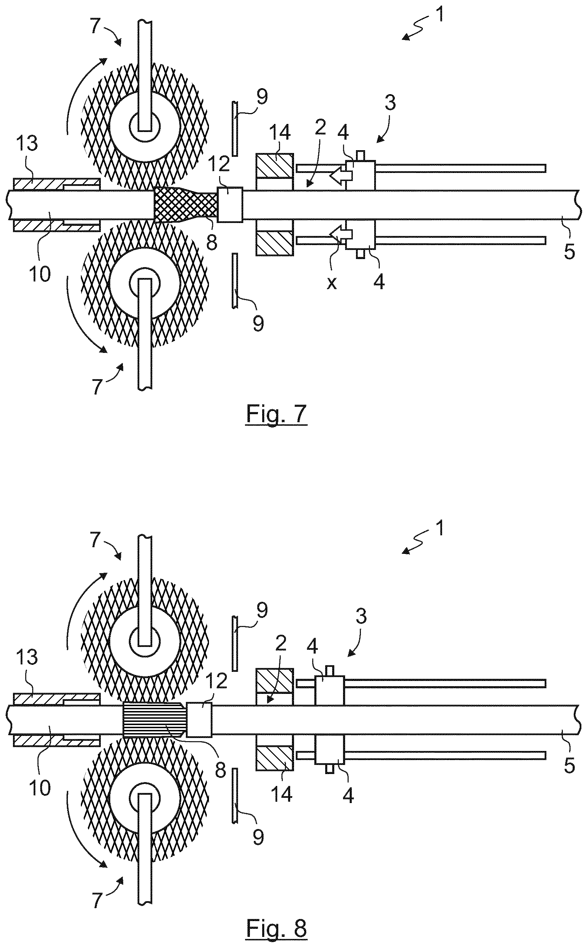

Die antreibbaren Rundbürsten 7 sind ausgebildet, um ein zumindest im Bereich des zu bearbeitenden Endes 2 des Kabels freigelegtes Kabelschirmgeflecht 8, in Richtung auf das zu bearbeitende Ende 2 des Kabels (bzw. in Vorschubrichtung x) geradezubürsten, wie in den Figuren 7 und 8 angedeutet. Während des Bürstens ist das Ende 2 des Kabels mittels der Klemmvorrichtung 3 zumindest verdrehsicher fixiert. Im Zuge einer möglichst vollständigen maschinellen Bearbeitung des Endes 2 des elektrischen Kabels können weitere Bearbeitungsschritte und Komponenten der Vorrichtung 1 vorgesehen sein, die für die Erfindung allerdings nicht einschränkend sondern nur optional als vorteilhafte Weiterbildungen zu verstehen sind.

In dem Verfahrensschritt der Figur 3 wird das zu bearbeitende Ende 2 des elektrischen Kabels mittels der Klemmvorrichtung 3 in Vorschubrichtung x in eine erste Bearbeitungsposition P₁ gebracht, in der sich das Kabelschirmgeflecht 8 des Endes 2 des Kabels zwischen zwei zangenartigen Werkzeugen 9 befindet (vgl. Figur 4). In dieser ersten Bearbeitungsposition P₁ wird das zu bearbeitende Ende 2 des elektrischen Kabels mittels der Klemmvorrichtung 3 anschließend zunächst wieder axial fixiert.

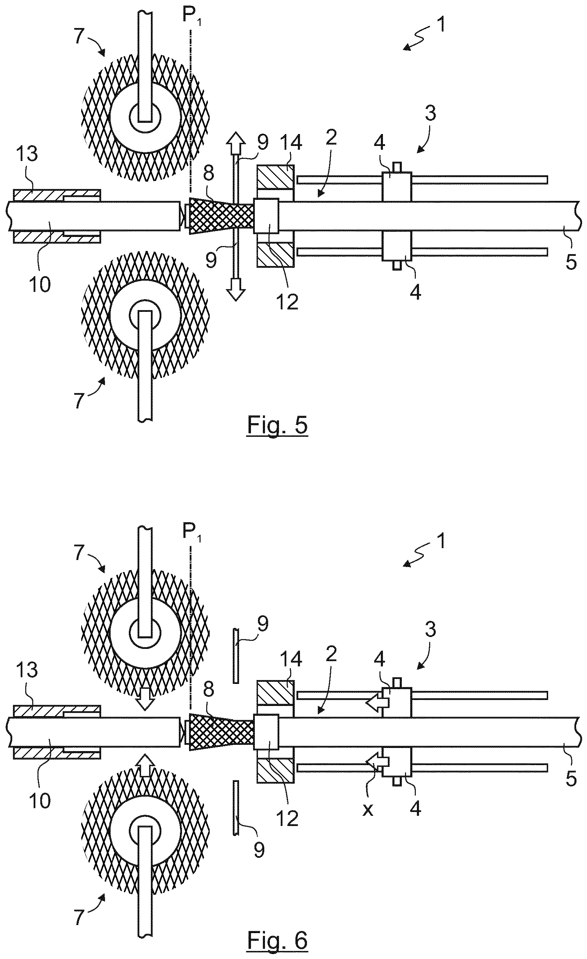

Die zangenartigen Werkzeuge 9 sind radial an den freigelegten Außenleiter bzw. das Kabelschirmgeflecht 8 des Endes 2 des Kabels zustellbar und ausgebildet und eingerichtet, radial umlaufende Eindrückungen in dem Kabelschirmgeflecht 8 zu erzeugen, sodass sich das freigelegte Ende des Kabelschirmgeflecht 8 radial aufweitet, wie in Figur 5 dargestellt.

Nach dem Aufweiten des Kabelschirmgeflechts 8 kann das zu bearbeitende Ende 2 des elektrischen Kabels mittels der Klemmvorrichtung 3, ausgehend von der ersten Bearbeitungsposition P₁, axial weiter bewegt werden, wie in Figur 6 angedeutet.

Die Rundbüsten 7 können radial zustellbar ausgebildet sein, beispielsweise mittels eines pneumatischen Aktuators (nicht dargestellt), um in einem nachfolgenden Verfahrensschritt, gemäß Darstellungen in den Figuren 7 und 8, das Kabelschirmgeflecht 8 des Endes 2 des Kabels geradezubürsten. Die Rundbürsten 7 können aber auch einen festen Abstand zur Mittelachse des Endes 2 des elektrischen Kabels aufweisen. Die Rundbürsten 7 können einen auf das Material des Kabelschirmgeflechts 8 optimal abgestimmten Besatz aufweisen, beispielsweise einen Nylonbesatz.

Es kann vorgesehen sein, dass die Klemmvorrichtung 3 und/oder die Bürsten 7 ausgebildet und eingerichtet sind, um das freigelegte Kabelschirmgeflecht 8 des Endes 2 des Kabels während des Bürstens in Bürstrichtung bzw. in axiale Zustell-/Vorschubrichtung x zwischen den Rundbürsten 7 hindurch zu bewegen, wie in den Figuren 7 und 8 dargestellt. Eine axiale Bewegung des zu bearbeitenden Endes 2 des elektrischen Kabels relativ zu den Bürsten 7 während des Bürstens ist allerdings nicht unbedingt erforderlich. Die Notwendigkeit hierfür kann ggf. von den Dimensionen des Außenleiters bzw. Kabelschirmgeflechts 8 und der Rundbürsten 7 abhängen. Die Klemmvorrichtung 3 kann so beispielsweise auch lediglich eine weitere feste Bearbeitungsposition zwischen den Rundbürsten 7 anfahren. Die Zustellung des Kabelschirmgeflechts 8 bzw. das Hindurchführen des Kabelschirmgeflechts 8 zwischen den Rundbürsten 7 während des Bürstens kann allerdings grundsätzlich zu einem verbesserten Bürstergebnis führen, unabhängig von den Dimensionen des Endes 2 des elektrischen Kabels oder der Rundbürsten 7.

Es kann optional vorgesehen sein, vor oder während des Bürstens eine Hülse 10 zwischen das Kabelschirmgeflecht 8 des Kabels und einen darunterliegenden Mantel 11 des Endes 2 des Kabels einzuschieben, um unter dem Außenleiter bzw. Kabelschirmgeflecht 8 des Kabels befindliche Bereiche des Kabels zu schützen. Hierfür kann die Hülse 10 axial an das zu bearbeitende Ende 2 des Kabels zustellbar ausgebildet sein. Die Hülse 10 kann vor oder während des Bürstens zwischen den zu bürstenden Abschnitt des Kabelschirmgeflechts 8 des Kabels und den darunterliegenden Mantel 11 des Kabels einschiebbar sein. Es kann allerdings auch vorgesehen sein, dass die Hülse 10 unbeweglich montiert ist, wobei die Hülse 10 dann unter das Kabelschirmgeflecht 8 des Kabels eingeschoben wird, indem das zu bearbeitende Ende 2 des elektrischen Kabels mittels der Klemmvorrichtung 3 axial an die Hülse 10 zugestellt wird, wie im Ausführungsbeispiel in den Figuren 6 bis 8 dargestellt. Gleichzeitig, d. h. mit derselben Bewegung kann die Durchführung des Kabelschirmgeflechts 8 durch die Rundbürsten 7 erfolgen. Auch eine kombinierte Zustellung von Kabelschirmgeflecht 8 und Hülse 10 kann vorgesehen sein.

In Figur 13 ist beispielhaft die Bearbeitung eines Kabelschirmgeflechts 8 mittels vier Rundbürsten 7 ohne die Verwendung einer Hülse 10 gezeigt.

Damit die Hülse 10 besonders einfach unter den Außenleiter bzw. das Kabelschirmgeflecht 8 einschiebbar ist, kann das in den Figuren 4 und 5 dargestellte vorhergehende Aufweiten des Kabelschirmgeflechts 8 vorteilhaft sein. Bei dem Aufweiten des Kabelschirmgeflechts 8 kann es von Vorteil sein, das Kabelschirmgeflecht 8 nicht zu weit radial aufzuweiten, da sonst die Hülse 10 während des Einschiebens ggf. an eine Stoßkante stoßen kann, was zu einem weiteren radialen Aufweiten des Kabelschirmgeflechts 8 führen kann und ggf. verhindert, dass die Hülse 10 unter das Kabelschirmgeflecht 8 eindringen kann. Ein Aufweiten des Kabelschirmgeflechts 8 ist im Rahmen der Erfindung nicht unbedingt erforderlich.

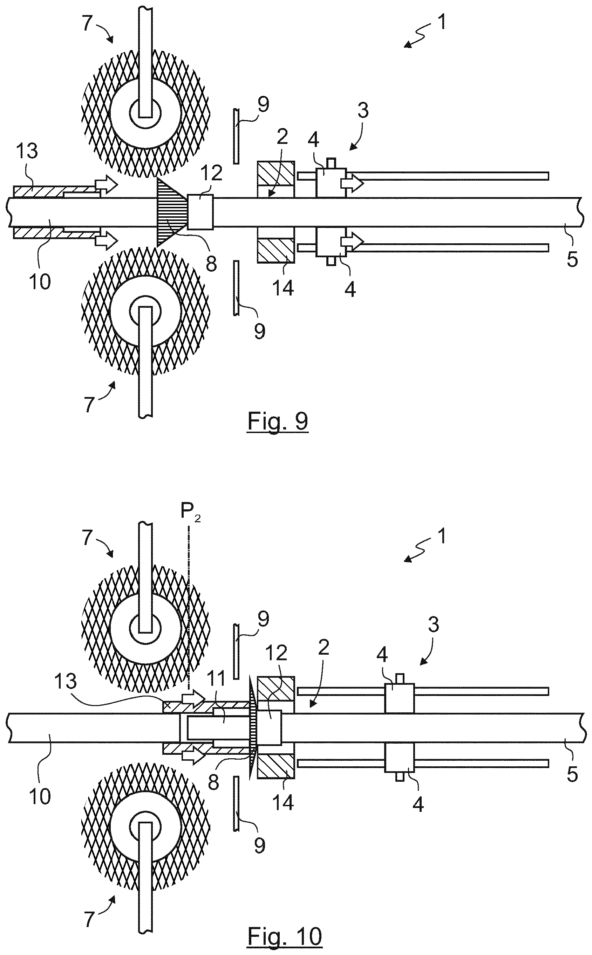

Der vollständig gerade gebürstete Außenleiter bzw. das ausgebürstete Kabelschirmgeflecht 8 ist in Figur 8 angedeutet. Für optionale und vorteilhafte nachfolgende Bearbeitungsschritte kann es von Vorteil sein, das ausgebürstete Kabelschirmgeflecht 8 anschließend radial weiter aufzuweiten und auf eine Stützhülse 12 bzw. einen sich an das zu bearbeitende Ende 2 des Kabels anschließenden Abschnitt des Kabels umzustülpen. Ein geeignetes Verfahren ist in den Figuren 9 bis 11 angedeutet.

Zum weiteren radialen Aufweiten des gebürsteten Kabelschirmgeflechts 8 kann vorgesehen sein, dass die antreibbaren Rundbürsten 7 eingerichtet sind, um nach dem Geradebürsten des Kabelschirmgeflechts 8 ihre Drehrichtung umzukehren. Dabei kann beispielsweise auch vorgesehen sein, dass die Rundbürsten 7 zunächst wieder von dem zu bearbeitenden Ende 2 des Kabels entfernt und anschließend mit umgekehrter Drehrichtung zumindest teilweise wieder zugestellt werden.

Für ein weiteres radiales Aufweiten des Kabelschirmgeflechts 8 kann auch vorgesehen sein, dass die Hülse 10 und/oder die Klemmvorrichtung 3 eingerichtet sind, einen Stoßimpuls entgegen die Bürstrichtung zwischen das Kabelschirmgeflecht 8 und den darunter liegenden Mantel 11 des Kabels einzuleiten.

Schließlich kann vorgesehen sein, dass ein entgegen die Bürstrichtung axial bis über das zu bearbeitende Ende 2 des Kabels zustellbarer Stempel 13 und eine das zu bearbeitende Ende 2 des Kabels zumindest teilweise umfassende Matrize 14 verwendet werden, die angeordnet und eingerichtet sind, um während der Zustellung des Stempels 13 zunächst den Außenleiter bzw. das Kabelschirmgeflecht 8 des Kabels zwischen Stempel 13 und Matrize 14 radial aufzustellen, bis der Stempel 13 im Wesentlichen axial an der Matrize 14 anliegt (vgl. Figur 10).

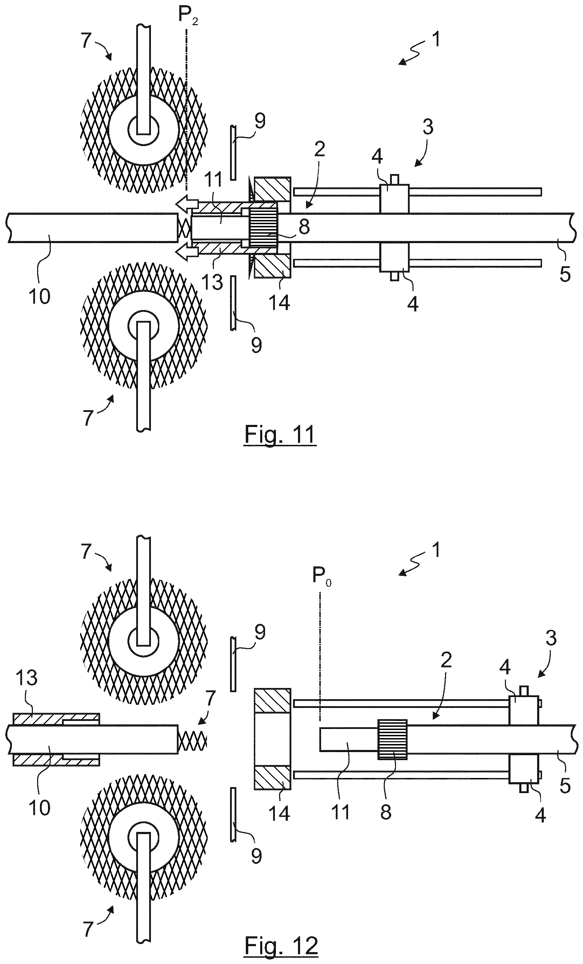

Anschließend kann das überschüssige Material des Außenleiters bzw. des Kabelschirmgeflechts 8 mittels Scherkräften zwischen Stempel 13 und Matrize 14 abgetrennt werden, während der Stempel 13 in die Matrize 14 eindringt (Bearbeitungszustand zwischen in den Figuren 10 und 11 gezeigten Zuständen), wonach schließlich das Kabelschirmgeflecht 8 durch Überfahren eines sich an das zu bearbeitende Ende 2 des Kabels anschließenden Abschnitts (vorliegend die Stützhülse 12) des Kabels umgestülpt wird, wie in Figur 11 dargestellt. Die Klemmvorrichtung 3 kann das zu bearbeitende Ende 2 des Kabels hierzu in eine zweite Bearbeitungsposition Pz verbringen, in der die Stützhülse 12 innerhalb der Matrize 14 angeordnet ist.

Figur 12 zeigt das Ende des Bearbeitungsverfahrens mit noch fixierter Klemmvorrichtung 3. Nach einem Öffnen der Klemmbacken 4 kann ein Benutzer oder eine nachfolgende Einrichtung das Ende 2 des elektrischen Kabels aus der Vorrichtung 1 entnehmen. Die Klemmvorrichtung 3 kann das Ende 2 des elektrischen Kabels hierzu beispielsweise wieder in die Grundposition P₀ transportiert haben.

In den Figuren 13 und 14 sind beispielhaft zwei verschiedene Arten elektrischer Kabel dargestellt. Bei einem elektrischen Kabel, dessen Ende 2 erfindungsgemäß bearbeitet werden kann, kann es sich beispielsweise um ein mehradriges Kabel gemäß Figur 13 oder um ein Koaxialkabel gemäß Figur 14 handeln. Grundsätzlich ist die Erfindung nicht auf die Verwendung mit einer bestimmten Art des elektrischen Kabels beschränkt zu verstehen.

Die Erfindung betrifft auch ein Kabelkonfektionierungssystem 15, umfassend zumindest eine Vorrichtung 1 zum Bearbeiten des wenigstens einen Endes 2 des elektrischen Kabels gemäß den vorstehenden Ausführungen. Ein erfindungsgemäßes Kabelkonfektionierungssystem 15 ist als Blockdiagramm in Figur 15 dargestellt.

Das Kabelkonfektionierungssystem 15 kann ferner eine Einrichtung 16 zum teilweisen Freilegen des Kabelschirmgeflechts 8 umfassen, um das zu bearbeitende Ende 2 des elektrischen Kabels gemäß der in Figur 1 dargestellten Art für die Vorrichtung 1 bereitzustellen.

Das Kabelkonfektionierungssystem 15 kann weiter eine Einrichtung 17 zur Montage eines Steckverbinders an das wenigstens eine zu bearbeitende Ende 2 des elektrischen Kabels aufweisen. Hierzu kann beispielsweise ein in Figur 14 gezeigtes Koaxialkabel mit einem Steckverbinder (nicht dargestellt) verbunden werden, wonach zunächst noch der Innenleiter 18 von dessen umhüllendem Dielektrikum 19 befreit wird. Anschließend kann der Steckverbinder einerseits mit dem wenigstens einen Innenleiter 18 und andererseits mit dem Außenleiter bzw. Kabelschirmgeflecht 8 verbunden, insbesondere vercrimpt werden. Eine Verbindung des Außenleiters/Kabelschirmgeflechts 8 des elektrischen Kabels mit dem Außenleiter des Steckverbinders kann insbesondere durch ein Vercrimpen des Außenleiters bzw. Kabelschirmgeflechts 8 des Endes 2 des elektrischen Kabels zwischen der Stützhülse 12 und einer weiteren Hülse des Steckverbinders erfolgen.

Schließlich kann das Kabelkonfektionierungssystem 10 noch eine Einrichtung 20 zum Ablängen des elektrischen Kabels aufweisen.

Das Kabelkonfektionierungssystem 10 kann außerdem noch beliebige weitere Einrichtungen aufweisen. Die Anordnung der Einrichtungen 1, 16, 17, 20 des Kabelkonfektionierungssystems 10 kann von der in Figur 15 gezeigten Anordnung auch abweichen.

## Patentansprüche

1. Vorrichtung (1) zum Bearbeiten eines Endes (2) eines elektrischen Kabels, umfassend eine Klemmvorrichtung (3) zum Fixieren des Kabels, wobei mehrere antreibbare Bürsten (7) vorgesehen sind, die entlang des Umfangs des durch die Klemmvorrichtung (3) fixierten Kabels verteilt angeordnet und ausgebildet sind, um ein zumindest im Bereich des zu bearbeitenden Endes (2) des Kabels freigelegtes Kabelschirmgeflecht (8) in Richtung auf das zu bearbeitenden Ende (2) des Kabels geradezubürsten, wobei die Klemmvorrichtung (3) ausgebildet ist, um das Kabel während des Bürstens verdrehsicher zu fixieren, und wobei drei Bürsten (7), vier Bürsten (7), fünf Bürsten (7), sechs Bürsten (7), sieben Bürsten (7) oder acht Bürsten (7) vorgesehen sind.

2. Vorrichtung (1) nach Anspruch 1,
**dadurch gekennzeichnet, dass**
die Klemmvorrichtung (3) wenigstens zwei an das Kabel zustellbare Klemmbacken (4) umfasst.

3. Vorrichtung (1) nach Anspruch 1 oder 2,
**dadurch gekennzeichnet, dass**
die Klemmvorrichtung (3) ausgebildet und eingerichtet ist, um das zu bearbeitenden Ende (2) des fixierten Kabels zwischen einer Grundposition (P₀) und wenigstens einer ersten Bearbeitungsposition (P₁) entlang einer Vorschubrichtung (x) axial zu bewegen.

4. Vorrichtung (1) nach einem der Ansprüche 1 bis 3,
**dadurch gekennzeichnet, dass**
die Klemmvorrichtung (3) und/oder die Bürsten (7) ausgebildet und eingerichtet sind, um das Kabelschirmgeflecht (8) während des Bürstens in Bürstrichtung axial zwischen den Bürsten (7) hindurch zu bewegen.

5. Vorrichtung (1) nach einem der Ansprüche 1 bis 4,
**dadurch gekennzeichnet, dass**
die Bürsten als Rundbürsten (8) ausgebildet sind.

6. Vorrichtung (1) nach einem der Ansprüche 1 bis 5,
**dadurch gekennzeichnet, dass**
eine axial an das zu bearbeitende Ende (2) des Kabels zustellbare Hülse (10) vorgesehen ist, und/oder dass die Klemmvorrichtung (3) ausgebildet und eingerichtet ist, um das zu bearbeitende Ende (2) des Kabels an die Hülse (10) zuzustellen, um die Hülse (10) vor oder während des Bürstens zwischen das freigelegte Kabelschirmgeflecht (8) und einen darunterliegenden Mantel (11) des Kabels einzuschieben.

7. Vorrichtung (1) nach einem der Ansprüche 1 bis 6,
**dadurch gekennzeichnet, dass**
ein radial an das Kabelschirmgeflecht (8) zustellbares zangenartiges Werkzeug (9) vorgesehen ist, das ausgebildet und eingerichtet ist, radial umlaufende Eindrückungen in dem Kabelschirmgeflecht (8) zu erzeugen, so dass sich das freigelegte Ende des Kabelschirmgeflechts (8) radial aufweitet.

8. Vorrichtung (1) nach einem der Ansprüche 1 bis 7,
**dadurch gekennzeichnet, dass**
die antreibbaren Bürsten (7) eingerichtet sind, um nach dem Geradebürsten des Kabelschirmgeflechts (8) ihre Drehrichtung umzukehren und/oder dass die Hülse (10) und/oder die Klemmvorrichtung (3) eingerichtet ist, einen Stoßimpuls entgegen die Bürstrichtung zwischen das Kabelschirmgeflecht (8) und den darunterliegenden Mantel (11) des Kabels einzuleiten, um das freigelegte Ende des Kabelschirmgeflechts (8) radial aufzuweiten.

9. Verfahren zum maschinellen Bearbeiten eines Endes (2) eines elektrischen Kabels, wobei mehrere entlang des Umfangs des Kabels verteilt angeordnete, antreibbare Bürsten (7) verwendet werden, um ein zumindest im Bereich des zu bearbeitenden Endes (2) des Kabels freigelegtes Kabelschirmgeflecht (8) in Richtung auf das zu bearbeitende Ende (2) des Kabels geradezubürsten, während das Kabel von einer Klemmvorrichtung (3) verdrehsicher fixiert wird, wobei drei Bürsten (7), vier Bürsten (7), fünf Bürsten (7), sechs Bürsten (7), sieben Bürsten (7) oder acht Bürsten (7) vorgesehen sind.

10. Verfahren nach Anspruch 9,
**dadurch gekennzeichnet, dass**
das Kabelschirmgeflecht (8) des Kabels während dem Bürsten in Bürstrichtung zwischen den Bürsten (7) hindurch bewegt wird und/oder dass die Bürsten (7) ausgehend von einem vorderen Ende des Kabelschirmgeflechts (8) entgegen einer Vorschubrichtung des Kabels über das Kabelschirmgeflecht (8) geführt werden.

11. Verfahren nach Anspruch 9 oder 10,
**dadurch gekennzeichnet, dass**
vor oder während dem Bürsten eine Hülse (10) zwischen das Kabelschirmgeflecht (8) und einen darunterliegenden Mantel (11) des Kabels eingeschoben wird, um unter dem Kabelschirmgeflecht (8) befindliche Bereiche des Kabels zu schützen.

12. Verfahren nach einem der Ansprüche 9 bis 11,
**dadurch gekennzeichnet, dass**
das freigelegte Ende des Kabelschirmgeflechts (8) nach dem Bürsten radial aufgeweitet wird, indem die Drehrichtung der Bürsten (7) umgekehrt wird und/oder indem ein Stoßimpuls zwischen das Kabelschirmgeflecht (8) und den darunterliegenden Mantel (11) des Kabels mittels der Hülse (10) eingeleitet wird.

13. Kabelkonfektionierungssystem (15), umfassend eine Vorrichtung (1) zum Bearbeiten des wenigstens einen Endes (2) des Kabels nach einem der Ansprüche 1 bis 8, sowie
- eine Einrichtung (16) zum teilweisen Freilegen eines Kabelschirmgeflechts (8) eines elektrischen Kabels im Bereich wenigstens eines zu bearbeitenden Endes (2) des Kabels; und/oder
- eine Einrichtung (17) zur Montage eines Steckverbinders an das wenigstens eine zu bearbeitende Ende (2) des Kabels; und/oder
- eine Einrichtung (20) zum Ablängen des Kabels.

## Claims

1. Apparatus (1) for machining an end (2) of an electrical cable, comprising a clamping apparatus (3) for fixing the cable, a plurality of drivable brushes (7) being provided which are arranged distributed along the periphery of the cable fixed by way of the clamping apparatus (3) and are configured to brush a cable screen (8), exposed at least in the region of that end (2) of the cable to be machined, straight in the direction of that end (2) of the cable to be machined, the clamping apparatus (3) being configured to fix the cable such that it cannot rotate during the brushing, and three brushes (7), four brushes (7), five brushes (7), six brushes (7), seven brushes (7) or eight brushes (7) being provided.

2. Apparatus (1) according to Claim 1,
**characterized in that**
the clamping apparatus (3) comprises at least two clamping jaws (4) which can be adjusted onto the cable.

3. Apparatus (1) according to Claim 1 or 2,
**characterized in that**
the clamping apparatus (3) is configured and set up to move that end (2) of the fixed cable to be machined axially along an advancing direction (x) between an initial position (P0) and at least one first machining position (P1).

4. Apparatus (1) according to one of Claims 1 to 3,
**characterized in that**
the clamping apparatus (3) and/or the brushes (7) are/is configured and set up to move the cable screen (8) axially in the brushing direction between the brushes (7) during the brushing.

5. Apparatus (1) according to one of Claims 1 to 4,
**characterized in that**
the brushes are configured as round brushes (8).

6. Apparatus (1) according to one of Claims 1 to 5,
**characterized in that**
a sleeve (10) which can be adjusted axially onto that end (2) of the cable to be machined is provided,
and/or **in that** the clamping apparatus (3) is configured and set up to adjust that end (2) of the cable to be machined onto the sleeve (10), in order to push the sleeve (10) between the exposed cable screen (8) and a sheath (11) of the cable lying underneath before or during the brushing.

7. Apparatus (1) according to one of Claims 1 to 6,
**characterized in that**
a tongs-like tool (9) which can be adjusted radially onto the cable screen (8) is provided, which tool (9) is configured and set up to produce radially peripheral indentations in the cable screen (8), with the result that the exposed end of the cable screen (8) is widened radially.

8. Apparatus (1) according to one of Claims 1 to 7,
**characterized in that**
the drivable brushes (7) are set up to reverse their rotational direction after brushing the cable screen (8) straight, and/or **in that** the sleeve (10) and/or the clamping apparatus (3) are/is set up to introduce a shock pulse counter to the brushing direction between the cable screen (8) and the sheath (11) of the cable lying underneath, in order to radially widen the exposed end of the cable screen (8).

9. Method for machining an end (2) of an electrical cable, a plurality of drivable brushes (7) which are arranged distributed along the periphery of the cable being used, in order to brush a cable screen (8), exposed at least in the region of that end (2) of the cable to be machined, straight in the direction of that end (2) of the cable to be machined, the cable being fixed such that it cannot rotate by a clamping apparatus (3), and three brushes (7), four brushes (7), five brushes (7), six brushes (7), seven brushes (7) or eight brushes (7) being provided.

10. Method according to Claim 9,
**characterized in that**
the cable screen (8) of the cable is moved in the brushing direction between the brushes (7) during the brushing, and/or **in that**, starting from a front end of the cable screen (8), the brushes (7) are guided over the cable screen (8) counter to an advancing direction of the cable.

11. Method according to Claim 9 or 10,
**characterized in that**
a sleeve (10) is pushed in between the cable screen (8) and a sheath (11) of the cable lying underneath before or during the brushing, in order to protect regions of the cable which are situated below the cable screen (8).

12. Method according to one of Claims 9 to 11,
**characterized in that**
the exposed end of the cable screen (8) is widened radially after the brushing, by the rotational direction of the brushes (7) being reversed, and/or by a shock pulse being introduced by means of the sleeve (10) between the cable screen (8) and the sheath (11) of the cable lying underneath.

13. Cable manufacture system (15), comprising an apparatus (1) for machining the at least one end (2) of the cable according to one of Claims 1 to 8, and
- a device (16) for partially exposing a cable screen (8) of an electrical cable in the region of at least one end (2) to be machined of the cable; and/or
- a device (17) for mounting a plug-in connector onto the at least one end (2) to be machined of the cable; and/or
- a device (20) for cutting the cable to length.

## Revendications

1. Dispositif (1) pour usiner une extrémité (2) d'un câble électrique, comprenant un dispositif de serrage (3) pour fixer le câble, dans lequel plusieurs brosses entraînables (7) sont prévues et sont distribuées le long de la périphérie du câble fixé par le dispositif de serrage (3), et sont conçues de manière à brosser en ligne droite, en direction de l'extrémité à usiner (2) du câble, une tresse de blindage de câble (8) qui est dénudée au moins dans la zone de l'extrémité à usiner (2) du câble, le dispositif de serrage (3) étant conçu de manière à fixer le câble sans possibilité de rotation pendant le brossage, et dans lequel trois brosses (7), quatre brosses (7), cinq brosses (7), six brosses (7), sept brosses (7) ou huit brosses (7) sont prévues.

2. Dispositif (1) selon la revendication 1,
**caractérisé en ce que le**
dispositif de serrage (3) comprend au moins deux mâchoires (4) réglables sur le câble.

3. Dispositif (1) selon la revendication 1 ou 2,
**caractérisé en ce que le**
dispositif de serrage (3) est conçu et agencé de manière à déplacer axialement l'extrémité à usiner (2) du câble qui est fixé entre une position de base (P0) et au moins une première position d'usinage (P1) le long d'une direction d'avancement (x).

4. Dispositif (1) selon l'une quelconque des revendications 1 à 3,
**caractérisé en ce que le**
dispositif de serrage (3) et/ou les brosses (7) est (sont) configuré(es) et agencé(es) de manière à déplacer la tresse de blindage de câble (8) axialement entre les brosses (7) pendant le brossage dans la direction de brossage.

5. Dispositif (1) selon l'une quelconque des revendications 1 à 4,
**caractérisé en ce que les**
brosses sont des brosses circulaires (8).

6. Dispositif (1) selon l'une quelconque des revendications 1 à 5,
**caractérisé en ce qu'il**
comprend un manchon (10) qui peut être approché axialement de l'extrémité à usiner (2) du câble, et/ou **en ce que** le dispositif de serrage (3) est conçu et agencé de manière à approcher l'extrémité à usiner (2) du câble du manchon (10), dans le but d'insérer le manchon (10) entre la tresse de blindage de câble (8) dénudée et une gaine sous-jacente (11) du câble, pendant le brossage ou avant celui-ci.

7. Dispositif (1) selon l'une quelconque des revendications 1 à 6,
**caractérisé en ce qu'il**
comprend un outil en forme de pince (9) qui peut être approché radialement de la tresse de blindage de câble (8) et qui est conçu et agencé de manière à produire des empreintes radiales périphériques dans la tresse de blindage de câble (8), de telle sorte que l'extrémité dénudée de la tresse de blindage de câble (8) s'élargisse radialement.

8. Dispositif (1) selon l'une quelconque des revendications 1 à 7,
**caractérisé en ce que les**
brosses entraînables (7) sont agencées de manière à inverser leur sens de rotation après le brossage rectiligne de la tresse de blindage de câble (8) et/ou **en ce que** le manchon (10) et/ou le dispositif de serrage (3) est (sont) agencé(s) de manière à introduire une impulsion de choc en sens inverse du sens de brossage entre la tresse de blindage de câble (8) et la gaine sous-jacente (11) du câble, dans le but d'élargir radialement l'extrémité dénudée de la tresse de blindage de câble (8).

9. Procédé d'usinage mécanique d'une extrémité (2) d'un câble électrique, dans lequel plusieurs brosses entraînables (7), qui sont distribuées le long de la périphérie du câble, sont utilisées pour brosser de manière rectiligne une tresse de blindage de câble (8) qui est dénudée au moins dans la zone de l'extrémité à usiner (2) du câble, en direction de l'extrémité à usiner (2) du câble, pendant que le câble est fixé par un dispositif de serrage (3) sans pouvoir tourner, trois brosses (7), quatre brosses (7), cinq brosses (7), six brosses (7), sept brosses (7) ou huit brosses (7) étant prévues.

10. Procédé selon la revendication 9,
**caractérisé en ce que la**
tresse de blindage de câble (8) est déplacée entre les brosses (7) pendant le brossage dans le sens du brossage et/ou **en ce que** les brosses (7) sont guidées sur la tresse de blindage de câble (8) à partir d'une extrémité avant de la tresse de blindage de câble (8) dans le sens inverse du sens d'avancement du câble.

11. Procédé selon la revendication 9 ou 10,
**caractérisé en ce que,**
avant ou pendant le brossage, un manchon (10) est inséré entre la tresse de blindage de câble (8) et une gaine sous-jacente (11) du câble dans le but de protéger les zones du câble qui sont situées en dessous de la tresse de blindage de câble (8).

12. Procédé selon l'une quelconque des revendications 9 à 11,
**caractérisé en ce que**
l'on élargit radialement l'extrémité dénudée de la tresse de blindage de câble (8) après le brossage, en inversant le sens de rotation des brosses (7) et/ou en introduisant une impulsion de choc entre la tresse de blindage de câble (8) et la gaine sous-jacente (11) du câble par l'intermédiaire du manchon (10).

13. Système de confection de câble (15) comprenant un dispositif d'usinage (1) de ladite au moins une extrémité (2) du câble selon l'une quelconque des revendications 1 à 8, ainsi que :
- un dispositif (16) de dénudage partiel d'une tresse de blindage (8) d'un câble électrique au niveau d'au moins une extrémité à usiner (2) du câble ; et/ou
- un dispositif (17) pour le montage d'un connecteur sur ladite au moins une extrémité à usiner (2) du câble ; et/ou
- un dispositif (20) pour couper le câble.
